**Europäisches Patentamt**

**European Patent Office**

**Office européen des brevets**

(11) Veröffentlichungsnummer: **0 264 713**
**A2**

# (12) EUROPÄISCHE PATENTANMELDUNG

(21) Anmeldenummer: **87114610.6**

(51) Int. Cl.4 **C02F 1/16**

(22) Anmeldetag: **07.10.87**

(30) Priorität: **21.10.86 DE 3635707**

(43) Veröffentlichungstag der Anmeldung:
**27.04.88 Patentblatt 88/17**

(84) Benannte Vertragsstaaten:
**BE CH DE FR IT LI NL**

(71) Anmelder: **BBC Brown Boveri**
**Aktiengesellschaft**
**Kallstadter Strasse 1**
**D-6800 Mannheim 31(DE)**

(72) Erfinder: **Rachid, Nabil**
**Valentinianstrasse 68**
**D-6802 Ladenburg(DE)**

(74) Vertreter: **Rupprecht, Klaus, Dipl.-Ing. et al**
**c/o BBC Brown Boveri Aktiengesellschaft**
**Kallstadter Str. 1 Postfach 100 351**
**D-6800 Mannheim 31(DE)**

(54) **Verfahren und Anlage zum Gewinnen von Süsswasser aus salzhaltigem Rohwasser.**

(57) Bei einer Destillationsanlage für salzhaltiges Rohwasser mit Beheizung des Endvorwärmers (20) durch die Abgaswärme einer Gasturbinenanlage (38) wird das Abgas vor dem Eintritt in den Endvorwärmer (20) durch Beimischung von Wasser auf eine derart niedrige Temperatur abgekühlt, daß Salzablagerungen und/oder Verkrustungen der vom Rohwasser beaufschlagten Heizflächen vermieden sind.

EP 0 264 713 A2

Figur 1

## Verfahren und Anlage zum Gewinnen von Süßwasser aus salzhaltigem Rohwasser

Die Erfindung betrifft ein Verfahren zum Gewinnen von Süßwasser aus salzhaltigem Rohwasser, wobei das Rohwasser unter Verwendung von Abgaswärme wenigstens einer Gasturbinenanlage in mindestens einem Endvorwärmer aufgeheizt und mindestens einer Entspannungs-Verdampfungskammer zugeführt wird.

Zur Gewinnung von Süßwasser aus salzhaltigem Rohwasser sind Entspannungs-Destillationsanlagen bekanntgeworden, in denen mindestens ein Oberflächen-Wärmetauscher, in dem das Rohwasser auf die für den Entspannungsprozeß erforderliche Endtemperatur aufgeheizt wird, durch einen als Dampfkessel betriebenen Abhitzewärmetauscher mit Heizdampf versorgt wird. Der Dampfkessel nutzt hierbei die Abgaswärme einer Gasturbinenkraftanlage aus. Der vom Dampfkessel gelieferte Heizdampf ist meist auf eine hohe Temperatur, z.B. 200° Celsius und mehr, überhitzt, so daß die Heizflächen des Endvorwärmers eine dementsprechend hohe Temperatur annehmen. Hierdurch entsteht die Gefahr von übermäßiger Ablagerung von Salzen des Rohwasser bzw. von Verkrustungen jener Wärmetauschflächen des Endvorwärmers, die mit dem Rohwasser in Berührung kommen.

Die Erfindung geht daher von der Erkenntnis aus, daß es zur Vermeidung der vorgenannten Nachteile wünschenswert ist, die Heizflächen des Endvorwärmers auf geringer Temperatur zu halten, und ihr liegt daher die Aufgabe zugrunde, das Verfahren der eingangs genannten Art auf einfache und kostengünstige Weise so weiterzubilden, daß trotz einer Wärmelieferung des Abhitzewärmetauschers bei hohem Temperaturniveau eine Beaufschlagung der Heizflächen des Endvorwärmers bei einem Verkrustungen sowie Salzablagerungen weitgehend vermeidenden niedrigerem Temperaturniveau möglich ist. Hierbei sollen Wärmeverluste weitgehend vermieden werden.

Zur Lösung dieser Aufgabe werden für das eingangs genannte Verfahren zwei Wege vorgeschlagen.

Der erste Lösungsweg besteht darin, daß durch Mischung des heißen Abgases mit feinverteiltem, kälteren Wasser ein Abgasdampfgemisch mit einer Temperatur von 80 bis 130° Celsius, vorzugsweise ungefähr 100° Celsius, erzeugt wird, und daß das Abgasdampfgemisch dem Endvorwärmer zugeführt und unter Abkühlung auf Taupunkttemperatur oder darunter zur Aufheizung des Rohwassers eingesetzt wird. Diese Aufheizung erfolgt durch indirekten Wärmetausch.

Durch die vom heißen Abgas bewirkte Verdampfung des zugemischten kälteren Wassers wird eine sehr einfache und wirksame Temperaturabsenkung des Abgases erzielt, während durch die Abkühlung des Abgases im Endvorwärmer auf mindestens Taupunkt-bzw. Kondensationstemperatur die im Wasserdampf vorhandene latente Wärme zusätzlich zur Aufheizung des Rohwassers wiedergewonnen und ausgenutzt wird.

Der zweite Lösungsweg ist darin zu sehen, daß ein im Kreislauf durch den Endvorwärmer zirkulierender flüssiger Wärmeträger durch das heiße Abgas auf eine Temperatur höher als 130° Celsius, vorzugsweise auf eine Temperatur zwischen 150 und 220° Celsius, aufgeheizt und vor seinem Eintritt in den Endvorwärmer durch Beimischen von bereits im Endvorwärmer abgekühlten Wärmeträger auf eine Temperatur von ungefähr 80 bis 130° Celsius, vorzugsweise ungefähr 100° Celsius, abgekühlt wird.

Hier wird der im Abgaswärmetauscher hocherhitzte Wärmeträger auf sehr einfache Weise, nämlich durch Beimischen des kälteren Rücklaufs, auf die gewünschte niedrigere Temperatur gebracht, wobei der besondere Vorteil besteht, daß zur weitgehend verlustarmen Abkühlung nur solche Mittel eingesetzt werden, nämlich der kältere Rücklauf, die im System ohnehin zur Verfügung stehen.

Beide Lösungswege machen von dem gemeinsamen Prinzip Gebrauch, die Abgaswärme bei hohem Temperaturviveau abzuführen und auf niedrigerem Temperaturniveau an das Rohwasser im Endvorwärmer weiterzugeben.

Eine bevorzugte Destillationsanlage zur Durchführung des Verfahrens gemäß dem ersten Lösungsweg mit jeweils mindestens einem Endvorwärmer, einer Entspannungs-Verdampfungskammer sowie einer Gasturbinenanlage mit in der Abgasleitung angeordnetem Abgaswärmetauscher, zeichnet sich dadurch aus, daß in der Abgasleitung stromauf des als Endvorwärmer ausgebildeten Abgaswärmetauschers ein Mischraum mit wassergespeisten Sprühdüsen angeordnet ist, und daß der Endvorwärmer abgasseitig mit einer selbsttätigen Entwässerungsvorrichtung für die Abfuhr des anfallenden Abgaskondensats versehen ist. Diese Anlage vereint geringen Bauaufwand mit hoher Leistungsfähigkeit. Hierbei ist besonders zu bemerken, daß das im Endvorwärmer anfallende Abgaskondensat salzfrei oder zumindest weitgehend salzfrei ist und nach einer gegebenenfalls erforderlichen Neutralisation bei saurem Abgaskondensat als Süßwasser mitverwendet werden kann.

Da das im Mischraum dem Abgas zugeführte Wasser einer Verdampfung und anschließend einer Kondensation unterworfen wird, ist das hierbei anfallende Abgaskondensat immer als Süßwasser zu betrachten, selbst wenn das den Sprühdüsen zugeführte Wasser aus salzhaltigem Wasser besteht. Gemäß einer vorteilhaften Weiterbildung der Erfindung können die Sprühdüsen daher durch eine Sprühdüsenleitung mit der Abfuhrleitung für das eingedickte Rohwasser verbunden sein.

Um die Wärmetauschflächen des Endvorwärmers mit Sicherheit auf dem gewünschten niedrigen Temperaturniveau halten zu können, besteht eine andere Ausgestaltung der Erfindung darin, daß in die Sprühdüsenleitung ein temperaturgesteuertes Durchflußregelorgan eingefügt ist, dessen Temperaturfühler in der Verbindungsleitung angeordnet ist, die vom Mischraum zum Endvorwärmer führt.

Eine zweckmäßige Destillationsanlage zur Durchführung des Verfahrens gemäß dem zweiten Lösungsweg mit jeweils mindestens einem Endvorwärmer, einer Entspannungs-Verdampfungskammer sowie einer Gasturbinenanlage mit in der Abgasleitung angeordnetem Abgaswärmetauscher ist dadurch gekennzeichnet, daß der Abgaswärmetauscher der Gasturbinenanlage durch eine Vorlaufleitung und eine Rücklaufleitung mit dem Endvorwärmer zu einem einen flüssigen Wärmeträger führenden Kreislauf verbunden ist, daß in der Rücklaufleitung eine Abzweigstelle angeordnet ist, von der eine Beimischleitung zu einer in der Vorlaufleitung vorgesehenen Beimischstelle führt, und daß vorzugsweise in dem zwischen der Beimischstelle und dem Endvorwärmer angeordnetem Vorlaufleitungs-Teilstück ein Temperaturfühler vorgesehen ist, der Bestandteil einer Beimischregelung ist, durch die der Wärmeträgerdurchfluß der Beimischleitung in Abhängigkeit von der Vorlauftemperatur im Teilstück einstellbar ist. Der zwischen dem Abgaswärmetauscher und dem Endvorwärmer eingeschaltete Wärmeträgerkreislauf ermöglicht auf einfache und weitgehend verlustlose Weise eine Verminderung der hohen Vorlauftemperatur auf das für den Endvorwärmer gewünschte niedrigere Temperaturniveau durch Beimischung von kälterem Rücklaufwasser, wobei dieses niedrigere Temperaturniveau durch die Beimischregelung mit Sicherheit eingehalten wird.

Die Beimischregelung kann zweckmäßigerweise eine in der Beimischleitung angeordnete Pumpe sowie ein temperaturgesteuertes Durchflußregelventil umfassen, besonders vorteilhaft ist es jedoch, daß die Beimischregelung ein an der Abzweigstelle angeordnetes Verteilventil aufweist, das seine Verstellimpulse vom Temperaturfühler erhält.

Eine andere vorteilhafte Weiterbildung der vorgenannten Destillationsanlagen besteht darin, daß jeweils die Entspannungs-Verdampfungskammer mit einer durch Rohwasser gespeisten Strahlpumpe (Wasserstrahler) zur Einstellung eines Unterdruckes verbunden ist. Auch ist es zweckmäßig, daß eine den Rauchgaswärmetauscher bzw. Endvorwärmer umgehende Abgas-Bypaßleitung mit einstellbarem Abgasdurchfluß vorgesehen ist. Hierdurch kann das Abgas vor der Zufuhr zu einem Abgaskamin in seinem Temperaturniveau angehoben werden, mit dem Ziel, den Auftrieb im Kamin zu verbessern und/oder Abgaskondensationen zu vermeiden.

Weitere Vorteile und Merkmale der Erfindung gehen aus der folgenden Beschreibung von Ausführungsbeispielen im Zusammenhang mit den schematischen Zeichnungen hervor.

Hierbei zeigt:

Fig. 1 eine Rohwasser-Destillationsanlage mit Abkühlung des Gasturbinen-Abgases durch Beimischung von Wasser und

Fig. 2 eine Rohwasser-Destillationsanlage mit Absenkung des Temperaturniveaus der Abwärme durch einen Wärmeträgerkreislauf.

Gleiche Teile sind in den einzelnen Figuren mit den gleichen Bezugszeichen versehen.

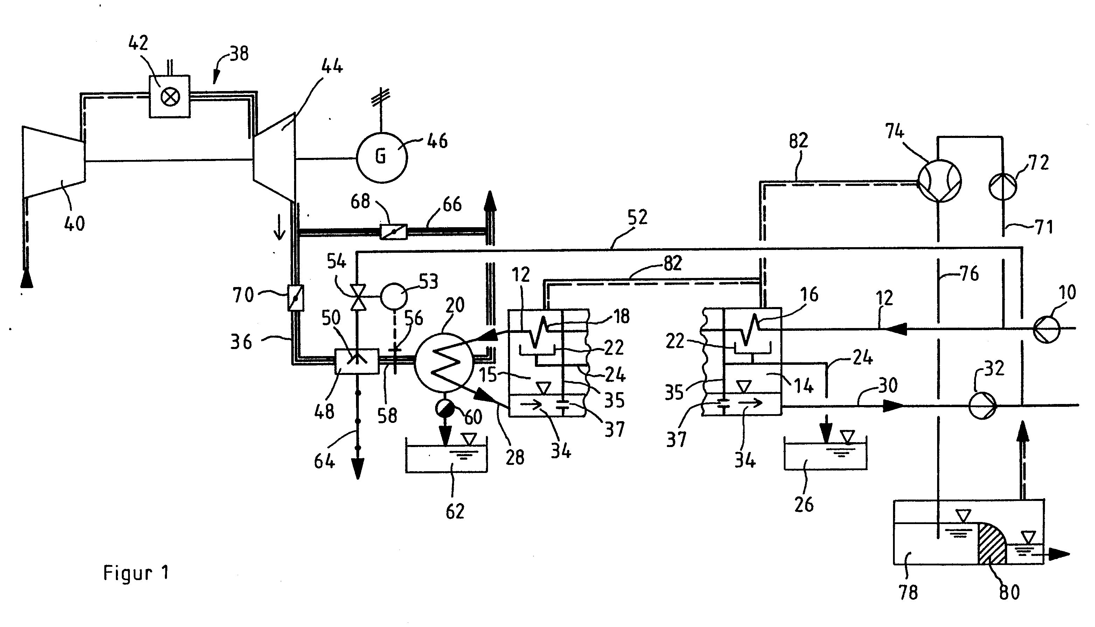

Die in Fig. 1 vereinfacht dargestellte Destillationsanlage arbeitet nach dem sogenannten Durchlaufprinzip. Hierzu wird das Rohwasser durch eine Rohwasserpumpe 10 und eine Rohwasserleitung 12 zur wärmeaufnehmenden Seite des Endvorwärmers 20 geführt. Hierzu verläuft die Rohwasserleitung 12 durch den oberen Bereich der Entspannungs-Verdampfungskammern. Es ist eine Vielzahl von Entspannungs-Verdampfungskammern, z.B. 6 bis 12 Stück oder mehr vorhanden, die im wesentlichen gleich ausgebildet sind. Zur besseren Übersicht sind in den Zeichnungen jedoch nur zwei Verdampfungskammern 14,15 dargestellt. In jeder Verdampfungskammer ist ein Brüdenkondensator 16,18 in die Rohwasserleitung 12 eingeschaltet. Unterhalb der Brüdenkondensatoren 16, 18 sind Auffangwannen 22 für das Süßwasser vorgesehen, die durch eine mit Gefälle verlaufende Süßwasserleitung 24 mit einem Süßwasserbehälter 26 verbunden sind. Der Ausgang der wärmeaufnehmenden Seite des Endvorwärmers 20 ist durch eine Rohrleitung 28 mit dem unteren Bereich der Verdampfungskammer 15 verbunden, wobei die Eintrittsstelle der Rohrleitung 28 in die Verdampfungskammer 15 auf der gleichen Endseite der Verdampfungskammer liegt wie der Austritt der Rohwasserleitung 12. In dem hier gezeigten Beispiel ist dies die linke Seite. Auf der gegenüberliegenden rechten Seite der Verdampfungskammer 14 ist unten eine Abfuhrleitung 30 mit eingefügter Abwasserpumpe 32 angeschlossen, durch die das in den Verdampfungskammern 14,15 eingedickte Rohwasser an die Umgebung abgeführt wird. Der Strömungsverlauf im unteren Bereich der Verdampfungskammern ist durch Pfeile 34 angedeutet. Die einzelnen Entspannungs-Verdampfungskammern sind durch vertikale Trennwände 35 voneinander getrennt. Um den Fluß des Rohwassers durch die unteren Bereiche der einzelnen Verdampfungskammern vom Endvorwärmer 20 zur Abfuhrleitung zu ermöglichen und um das für die Verdampfung erforderliche Druckgefälle zwischen den Verdampfungskammern herzustellen, sind in den unteren Bereichen der Trennwände Öffnungen 37 vorgesehen. Die Größe dieser Öffnungen 37 ist so gewählt, daß sich zwischen den einzelnen Verdampfungskammern ein Druckgefälle einstellt. Die Öffnungen 37 liegen unterhalb der sich in Verdampfungskammern einstellenden Rohwasserspiegel, die in den Zeichnungen angedeutet sind.

Die wärmeaufnehmende Seite des Endvorwärmers 20 ist in die Abgasleitung 36 der Gasturbinenanlage 38 eingefügt. Diese weist in bekannter Weise einen Verdichter 40, eine Brennkammer 42 sowie eine Gasturbine 44 auf, die einen elektrischen Generator 46 antreibt. In der Abgasleitung 36 ist stromauf des Endvorwärmers 20 ein Mischraum 48 vorgesehen, in dem eine Vielzahl von Sprühdüsen 50 angeordnet ist. Der Einfachheit halber ist in der Zeichnung nur eine einzige Sprühdüse angedeutet. Die Sprühdüsen 50 sind durch eine Düsenleitung 52 mit der Abfuhrleitung 30 stromab der Abwasserpumpe 32 verbunden, wobei in die Düsenleitung 52 ein z.B. von einem Stellmotor 53 angetriebenes Durchflußregelorgan 54 eingefügt ist, dessen Durchlaßquerschnitt von einem Temperaturfühler 56 beeinflußbar ist. Der Temperaturfühler 56 ist in der Verbindungsleitung 58 angeordnet, welche den Mischraum 48 mit dem Endvorwärmer 20 abgasseitig verbindet. An der tiefsten Stelle der vom Abgas beaufschlagten Seite des Endvorwärmers 20 ist eine selbsttätige Entwässerungsvorrichtung 60, vorzugsweise in Form eines Kondensatableiters vorgesehen, dessen Abfluß in einen Kondensatbehälter 62 mündet. In den Sprühdüsen 50 wird das Wasser durch den Druck der Abwasserpumpe 32 zerstäubt.

Die im Mischraum 48 ausgeschiedenen Salze, Feststoffe bzw. Lauge werden durch die Abflußleitung 64, die am tiefsten Bereich des Mischraumes 48 angeschlossen ist, abgezogen.

Die Abgasleitung 36 ist noch mit einer Abgas-Bypaßleitung 66 versehen, welche den Mischraum 48 und den Endvorwärmer 20 abgasseitig umgeht. Zur Einstellung des Gasdurchflusses ist in der Bypaßleitung 66 sowie in der Abgasleitung 36 stromauf des Mischraums 48 jeweils ein einstellbares Absperr-und Drosselorgan wie Abgasklappe 68 bzw. 70 angeordnet.

An die Rohwasserleitung 12 ist stromab der Rohwasserpumpe 10 eine Speiseleitung 71 angeschlossen, die über eine Druckerhöhungspumpe 72 zu einem Wasser-Strahler 74 (Wasserstrahl-Pumpe) führt. Der Wasserabfluß dieses Strahlers wird durch eine Leitung 76 bewirkt, die in einen Behälter 78 mündet, der das zugeführte Rohwasser über ein Überlaufwehr 80 in die Umgebung abführt. Die Saugseite des Strahlers 74 ist durch die Saugleitung 82 mit den oberen Bereichen der Verdampfungskammern 14,15 verbunden.

Für die Erzeugung von Süßwasser werden bei laufender Gasturbinenanlage 38 die Rohwasserpumpe 10, die Abwasserpumpe 32 sowie die Druckerhöhungspumpe 72 in Betrieb genommen. Das Rohwasser strömt jetzt durch die Rohwasserleitung 12 und durch die in den Verdampfungskammern 14,15 angeordneten Brüdenkondensatoren 16, 18 zum Endvorwärmer 20, und von hier durch die Rohrleitung 28 in den unteren Bereich der Entspannungskammer 15. Von hier fließt das Rohwasser durch die Öffnung 37 zur nächsten Entspannungskammer und so weiter bis zur letzten Entspannungskammer 14. Durch die Abfuhrleitung 30 wird hierbei nur soviel Rohwasser aus der Entspannungskammer 14 abgezogen und an die Umgebung abgeführt bzw. den Sprühdüsen 50 zugeführt, daß immer eine bestimmte Wassermenge im unteren Bereich der Verdampfungskammer vorhanden ist, deren Oberfläche angedeutet ist.

Das aus der Gasturbine 44 austretende heiße Abgas, dessen Temperatur meistens zwischen 400 und 500° Celsius liegt, wird in den Mischraum 48 geleitet. Hier kommt dieses Abgas mit dem aus den Sprühdüsen 50 austretenden und durch die Düsenleitung 52 zugeführten Rohwasser in innigen Kontakt, so daß unter Verdampfung des eingesprühten Wassers die Abgastemperatur erniedrigt wird und ein Abgaswasserdampfgemisch von einer niedrigeren Temperatur, vorzugsweise 80 bis 130° Celsius entsteht. Zur Einhaltung dieser niedrigeren Abgastemperatur ist das Durchflußregelorgan 54 in der Düsenleitung 52 vorgesehen, dessen Temperaturfühler die Temperatur des Abgasdampfgemisches nach dem Verlassen des Mischraums 48 in der Verbindungsleitung 58 erfaßt. Durch das Durchflußregelorgan 54 wird hierbei die Rohwasserzufuhr zu den Sprühdüsen 50 so eingeregelt, daß die eingestellte und vorgegebene niedrige Temperatur des Abgasdampfgemisches eingehalten wird. Dieses Abgasdampfgemisch von niedriger Temperatur strömt dann durch die Verbindungsleitung 58 zum Endvorwärmer 20 und erhitzt das dort durchströmende Rohwasser auf seine Endtemperatur. Hierbei wird die Abkühlung des Abgaswasserdampfgemisches in Endvorwärmer durch entsprechend große Auslegung der Heizflächen soweit getrieben, daß der Taupunkt des Abgaswasserdampfgemisches erreicht oder besser unterschritten wird, und der Wasserdampf unter Wärmeabgabe an das Rohwasser kondensiert. Das Rohwasser wird somit durch die fühlbare und latente Wärme des Abgaswasserdampfgemisches aufgeheizt. Da das Rohwasser durch die Wärmetauschflächen des Endvorwärmers vom Abgaswasserdampfgemisch getrennt ist, erfolgt keinerlei Verschmutzung des Rohwassers durch Bestandteile des Abgases. Das anfallende Kondensat wird durch die Entwässerungsvorrichtung 60 dem Kondensatsammelbehälter 62 zugeführt. Das meistens saure Kondensat kann nach einer Neutralisation als Süßwasser verwendet werden.

Die im Mischraum 48 anfallenden Salze bzw. Feststoffe oder Lauge werden durch die Abflußleitung 64 abgezogen.

Nach dem Verlassen des Endvorwärmers 20 kann das verbleibende Abgas einem nicht dargestellten Abgaskamin zugeführt werden. Um den Auftrieb im Kamin zu verbessern und/oder um weitere Kondensationen zu vermeiden, kann diesem Abgas durch die Bypaßleitung 66 heißes Abgas zur Temperaturerhöhung beigemischt werden. Die Dosierung erfolgt hierbei durch entsprechende Einstellung der Abgasklappen 68 und 70. In vielen Fällen wird die Abgasklappe 68 jedoch geschlossen, die Abgasklappe 70 dagegen geöffnet sein und das gesamte Abgas zum Mischraum 48 geleitet.

Infolge des niedrigen Temperaturniveaus im Endvorwärmer 20 sind rohwasserseitige Salzablagerungen und/oder Verkrustungen sowie Korrosionen weitgehend vermieden, so daß die Lebensdauer bzw. die Zeitspanne zwischen zwei Reinigungsvorgängen des Endvorwärmers verlängert ist.

Wegen des niedrigen Temperaturniveaus im Endvorwärmer 20 wird das Rohwasser dort auf eine Temperatur von ungefähr 80 bis 100° Celsius erhitzt, so daß zu seiner Verdampfung in den Verdampfungskammern 14,15 ein entsprechender Unterdruck erforderlich ist. Dieser Unterdruck wird durch den Wasserstrahler 74 erzeugt, dessen Saugseite durch die Saugleitung 84 mit den Entspannungskammern 14,15 verbunden ist.

Der in den Verdampfungskammern 14,15 entstehende Dampf wird durch die Brüdenkondensatoren 16, 18 unter Erwärmung des Rohwassers kondensiert, das salzfreie Kondensat tropft als Süßwasser in die Auffangwannen 22 und wird dem Süßwasserbehälter 26 zugeleitet.

Destillationsanlagen, die nach dem Entspannungsprinzip arbeiten, sind in der Technik seit langem bekannt, so daß sich weitere Ausführungen erübrigen.

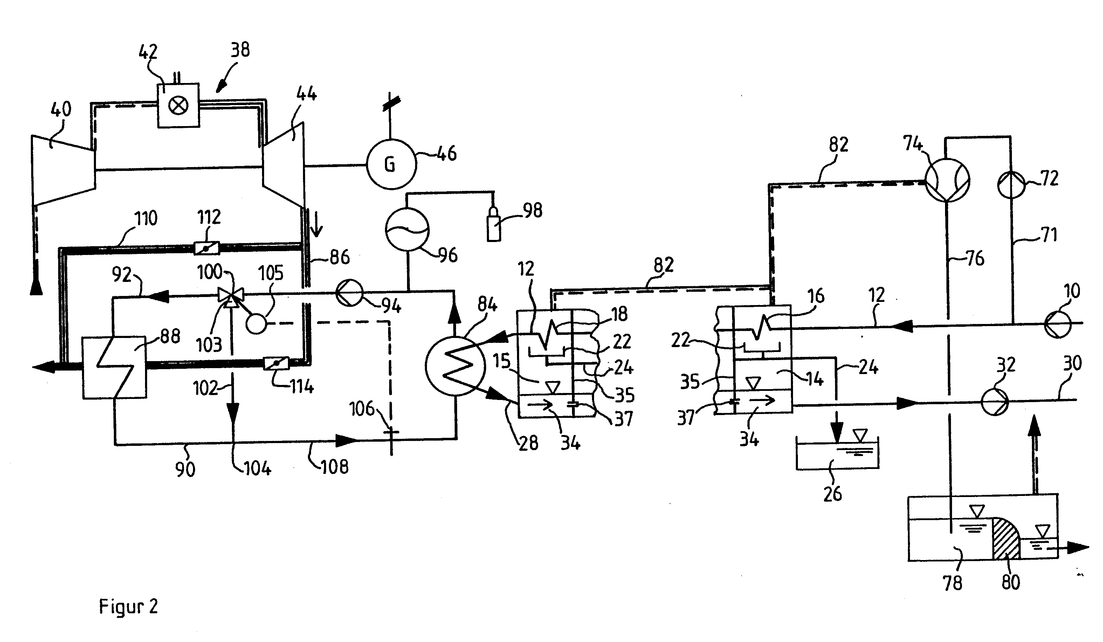

Die Destillationsanlage gemäß Figur 2 weist gegenüber der Anlage gemäß Fig. 1 den Unterschied auf, daß die Abgaswärme der Gasturbinenanlage 38 mit Hilfe eines wärmeträgerführenden Kreislaufes an den Endvorwärmer 84 abgegeben wird. Hierzu ist in die von der Gasturbine 44 kommende Abgasleitung 86 der Abgaswärmetauscher 88 ein gefügt, dessen wärmeabgebende Seite durch eine Vorlaufleitung 90 und eine Rücklaufleitung 92 mit eingefügter Umwälzpumpe 94 zu einem Kreislauf mit dem Endvorwärmer 84 zusammengeschaltet ist. Als Wärmeträger dient eine Flüssigkeit, vorzugsweise vollentsalztes Wasser, so daß Versalzungen dieses Kreislaufes vermieden sind. An die Rücklaufleitung 92 ist ein Ausdehnungsgefäß 96 angeschlossen, das mit Fremddruck, vorzugsweise mit Stickstoff aus einem Stickstoffdruckbehälter 98, beaufschlagt werden kann. Da im Wärmeträgerkreislauf Temperaturen über 100° Celsius auftreten, ist zur Vermeidung von Dampfbildungen die Ausbildung und Aufrechterhaltung eines die Verdampfung verhindernden Druckes im Ausdehnungsgefäß erforderlich.

In der Rücklaufleitung 92 ist stromauf des Abgaswärmetauschers 88 ist eine Abzweigstelle 100 vorgesehen, die durch eine Beimischleitung 102 mit der Vorlaufleitung 90 stromab des Abgaswärmetauschers 88 an der Beimischstelle 104 verbunden ist. An der Abzweigstelle 100 ist zweckmäßig ein z.B. von einem Stellmotor 105 angetriebenes Verteilventil 103 angeordnet, das zur Beimischsteuerung mit einem Temperaturfühler 106 in Wirkverbindung steht. Der Temperaturfühler 106 ist hierzu in dem Vorlaufleitungsteilstück 108 angeordnet, das zwischen der Beimischstelle 104 und dem Endvorwärmer 84 verläuft. Vorzugsweise ist der Temperaturfühler 106 in unmittelbarer Nähe des Endvorwärmers 84 angeordnet. Entsprechendes gilt auch für den Temperaturfühler 56 des Ausführungsbeispieles gemäß Fig. 1.

Stromab der Gasturbine 44 ist eine Umgehungsleitung 110 an die Abgasleitung 86 angeschlossen, die stromab des Abgaswärmetauschers 88 wieder in die Abgasleitung mündet. In dieser Umgehungsleitung ist ein Absperr-und Drosselorgan 112 z.B. in Form einer Abgasklappe angeordnet. Ebenso ist ein Absperr-und Drosselorgan 114 stromauf des Abgaswärmetauschers 88 in der Abgasleitung 86 vorgesehen. Die Umgehungsleitung 110 dient hier den gleichen Zwecken wie im Ausführungsbeispiel gemäß Fig. 1. Darüber hinaus ermöglichen die Bypaß-bzw. Umgehungsleitung den Betrieb der Gasturbinenanlage ohne Abgasbeaufschlagung des in der Abgasleitung angeordneten Wärmetauschers, falls dies, z.B. bei Reparaturarbeiten, erforderlich sein sollte. Diese gilt auch für das Ausführungsbeispiel gemäß Fig. 1.

Während des Betriebs der Anlage ist das Absperr-und Drosselorgan 112 normalerweise geschlossen, das Absperr-und Drosselorgan 114 dagegen geöffnet, so daß das gesamte von der Gasturbine 44 kommende Abgas, das eine Temperatur von ungefähr 400 bis 500° Celsius aufweist, den Abgaswärmetauscher 88 durchströmt. Hierbei gibt dieses Wärme an den im Wärmeträgerkreislauf durch die Pumpe 94 umgewälzten Wärmeträger ab und heizt diesen infolge der hohen Abgastemperatur auf eine Vorlauftemperatur von ungefähr 150 bis 220° Celsius auf. Vorzugsweise beträgt diese Temperatur 170 bis 200° Celsius. Da mit dieser hohen Temperatur der Endvorwärmer 84 nicht beaufschlagt werden darf, wird an der Abzweigstelle 100 bereits abgekühlter Wärmeträger der Rücklaufleitung 92 entnommen, durch die Beimischleitung 102 geführt und an der Beimischstelle 104 dem Vorlauf beigemischt, so daß dessen Temperatur auf das gewünschte Maß von 80 bis 130° Celsius abgesenkt wird. Mit dieser erniedrigten Vorlauftem peratur wird dann der Endvorwärmer 84 beaufschlagt. Da der Wärmeträger durch die Wärmetauschfläche des Endvorwärmers vom Rohwasser getrennt ist, erfolgt der Wärmetausch ·indirekt. Der Temperaturfühler 106 erfaßt diese erniedrigte Vorlauftemperatur und veranlaßt entsprechende Stellbefehle an das Verteilventil 103, das den zufließenden Rücklauf aufteilt und einen Teilstrom dem Abgaswärmetauscher 88 und einen anderen Teilstrom der Beimischstelle 104 zuteilt. Um das Maß der Temperaturerniedrigung des Vorlaufs variieren zu können, ist die Beimischregelung entsprechend voreinstellbar.

Im vorliegenden Fall wird also die Abgaswärme bei hohem Temperaturniveau und bei hoher Temperaturdifferenz zwischen Abgas und Wärmeträger an den Wärmeträgerkreislauf übertragen, wodurch Abgaswärmetauscher geringer Baumaße, das heißt billige Abgaswärmetauscher mit kleinen Wärmetauschflächen, einsetzbar sind, und zugleich wird dieses hohe Temperaturniveau durch Beimischung des kälteren Rücklaufs auf das gewünschte niedrigere Temperaturniveau des Endvorwärmers 84 abgesenkt, so daß dort Salzausscheidungen und/oder Verkrustungen und/oder Korrosionen der rohwasserführenden Heizflächen vermieden oder doch zumindest weitgehend vermieden und verzögert sind. Die Arbeitsweise der Destillationsanlage ist auch hier entsprechend dem Ausführungsbeispiel gemäß Fig. 1, so daß sich weiteres hierüber erübrigt.

Besonders hervorzuheben ist noch, daß die angegebenen Maßnahmen zur Absenkung des Temperaturniveaus nicht nur für den Endvorwärmer von Vorteil sind, sondern sich für alle entsprechend beheizten Wärmetauscher der Anlage eignen. Dementsprechend sind unter dem Begriff "Endvorwärmer" im Sinne vorliegender Erfindung auch andere Wärmetauscher der Destillationsanlage zu verstehen, bei denen das gleiche Problem ansteht. Auch ist die Lehre der Erfindung vorteilhaft für Destillationsanlagen jeglicher Art geeignet, bei denen vergleichbare Probleme auftreten.

Ferner ist darauf hinzuweisen, daß als Rohwasser im Sinne vorliegender Erfindung sämtliche salzhaltigen Wässer, wie z.B. Meerwasser, Seewasser oder Brackwasser verstanden sein sollen. Der Begriff Süßwasser umfaßt salzfreies Wasser oder Wasser mit nur geringem Salzgehalt.

## Ansprüche

1. Verfahren zum Gewinnen von Süßwasser aus salzhaltigem Rohwasser, wobei das Rohwasser unter Verwendung von Abgaswärme wenigstens einer Gasturbinenanlage (38) in mindestens einem Endvorwärmer (20) aufgeheizt und mindestens einer Entspannungs-Verdampfungskammer (14,15) zugeführt wird, dadurch gekennzeichnet, daß durch Mischung des heißen Abgases mit feinverteiltem kälterem Wasser ein Abgasdampfgemisch mit einer Temperatur von ungefähr 80 bis 130° Celsius, vorzugsweise ungefähr 100° Celsius, erzeugt wird, und daß das Abgasdampfgemisch dem Endvorwärmer (20) zugeführt und unter Abkühlung auf Taupunkttemperatur oder darunter zur indirekten Aufheizung des Rohwassers eingesetzt wird.

2. Verfahren zum Gewinnen von Süßwasser aus salzhaltigem Rohwasser, wobei das Rohwasser unter Verwendung von Abgaswärme wenigstens einer Gasturbinenanlage (38) in mindestens einem Endvorwärmer (84) aufgeheizt und mindestens einer Entspannungs-Verdampfungskammer (14,15) zugeführt wird, dadurch gekennzeichnet, daß ein im Kreislauf durch den Endvorwärmer (84) zirkulierender flüssiger Wärmeträger durch das direkt von der Gasturbinenanlage (38) kommende heiße Abgas auf eine Temperatur höher als ungefähr 130° Celsius, vorzugsweise auf eine Temperatur zwischen ungefähr 150 und ungefähr 220° Celsius aufgeheizt und vor seinem Eintritt in den Endvorwärmer (84) durch Beimischen von bereits im Endvorwärmer abgekühltem Wärmeträger auf eine Temperatur von ungefähr 80 bis 130° Celsius, vorzugsweise ungefähr 100° Celcius abgekühlt wird.

3. Destillations-Anlage zur Durchführung des Verfahrens nach Anspruch 1, mit jeweils mindestens einem Endvorwärmer (20), einer Entspannungs-Verdampfungskammer (14,15), sowie einer Gasturbinenanlage (38) mit in der Abgasleitung (36) angeordnetem Oberflächen-Abgaswärmetauscher, dadurch gekennzeichnet, daß in der Abgasleitung (36) stromauf des als Endvorwärmer (20) ausgebildeten Abgaswärmetauschers ein Mischraum (48) mit mindestens einer wassergespeisten Sprühdüse (50) angeordnet ist, und daß vorzugsweise der Endvorwärmer (20) abgasseitig mit einer selbsttätigen Entwässerungsvorrichtung (60) für die Abfuhr des anfallenden Abgaskondensats versehen ist (Fig. 1).

4. Anlage nach Anspruch 3, dadurch gekennzeichnet, daß die Sprühdüse (50) durch eine Düsenleitung (52) mit der Abfuhrleitung (30) für das eingedickte Rohwasser verbunden ist.

5. Anlage nach Anspruch 3 oder 4, dadurch gekennzeichnet, daß in die Düsenleitung (52) ein temperaturgesteuertes Regelorgan (54) eingefügt ist, dessen Temperaturfühler (56) in der Verbindungsleitung (58) angeordnet ist, die vom Mischraum (48) zum Endvorwärmer (20) führt.

6. Destillationsanlage zur Durchführung des Verfahrens nach Anspruch 2, mit jeweils mindestens einem Endvorwärmer (84), einer Entspannungs-Verdampfungskammer (14,15) sowie einer Gasturbinenanlage (38) mit in der Abgasleitung (36) angeordnetem Oberflächen-Abgaswärmetauscher (88), dadurch gekennzeichnet, daß der Abgaswärmetauscher (88) durch eine Vorlaufleitung (90) und eine Rücklaufleitung (92) mit dem Endvorwärmer (84) zu einem einen flüssigen Wärmeträger führenden Kreislauf verbunden ist, daß in der Rücklaufleitung (92) eine Abzweigstelle (100) angeordnet ist, von der eine Beimischleitung (102) zu einer in der Vorlaufleitung (90) vorgesehenen Beimischstelle (104) führt, und daß in dem zwischen der Beimischstelle (104) und dem Endvorwärmer (84) verlaufenden Vorlaufleitungs-Teilstück (108) ein Temperaturfühler (106) vorgesehen ist, der Bestandteil einer Beimischregelung ist, durch die der Wärmeträgerdurchfluß der Beimischleitung (102) in Abhängigkeit von der Vorlauftemperatur im Teilstück (108) einstellbar ist (Fig. 2).

7. Anlage nach Anspruch 6, dadurch gekennzeichnet, daß die Beimischregelung ein an der Abzweigstelle (100) angeordnetes Verteilventil (103) aufweist.

8. Anlage nach einem der Ansprüche 3 bis 7, dadurch gekennzeichnet, daß die Verdampfungskammer (14,15) mit einem Wasserstrahler (74) zur Einstellung eines die Dampfabgabe des Rohwassers bewirkenden Unterdruckes verbunden ist.

9. Anlage nach einem der Ansprüche 3 bis 8, dadurch gekennzeichnet, daß eine den Abgaswärmetauscher (88) bzw. Endvorwärmer (20) umgehende Umgehungsleitung (110) bzw. Abgas-Bypaßleitung (66) mit einstellbarem Abgasdurchfluß vorgesehen ist.

Figur 1

Figur 2